# EUROPEAN PATENT APPLICATION

(11) **EP 2 510 778 A2**
(43) Date of publication of application: **17.10.2012**
(21) Application number: 11175315.8
(22) Date of filing: 26.07.2011
(51) Int. Cl.: A01G 9/14, A01G 9/24, E04H 1/12

(54) **Covering for greenhouse**

(30) Priority: 12.04.2011 IT PD20110112
(71) Applicant: Stc Engineering srl, 35011 Campodarsego (PD) (IT)
(72) Inventor: Cognolato, Ettore, 35011 CAMPODARSEGO (PD) (IT)
(74) Representative: Vinci, Marcello

(57) **Abstract**

Covering (1) for greenhouses comprising a frame structure (2) with anchoring or ground foundation elements (21), uprights and cross members (22) defining the walls (12) and the roof (11) of the covering, one or more covering panels or sheets (4) and one or more photovoltaic panels (3) with cylindrical cells (31), directly or indirectly constrained to said frame structure (2) and positioned under said covering panels or sheets (4) and covered by them.

## Description

The present patent relates to coverings for greenhouses and particularly concerns a new covering for a greenhouse with the recovery of solar energy. There are known coverings for greenhouses comprising a frame structure and one or more covering panels or sheets.

The frame generally consists of a plurality of rods or girders, forming a load-bearing structure, while the covering panels or sheets are constrained to said structure, thus creating the walls and the roof of the covering, and identifying a space underneath destined for growing plants of various kinds. The covering sheet serves the purpose of preventing weather conditions, e.g. rain, hail, snow or the like, from damaging the plants.

Said sheets or panels are made of a material that allows for the transmission of the sunlight coming to bear on the covering, which has to reach the ground and the plants underneath, or in any case maintain particular climatic conditions inside the greenhouse.

The coverings of known type may also comprise movable parts, such as windows or vents for adjusting the temperature inside the greenhouse.

Such coverings may also have very large surface areas.

Efforts are consequently made to exploit the surface area of the coverings that would otherwise remain unused.

There are known photovoltaic panels consisting of a plurality of solar cells of cylindrical shape, wherein said solar cells are aligned with one another to form a substantially linear cylindrical structure.

Said linear cylindrical structures can be placed side-by-side with a gap of a few centimetres between one another and connected to one another to form a flat panel structure.

The panels thus obtained are currently used as normal photovoltaic panels, e.g. positioned on roofs or on dedicated structures.

Unlike the flat photovoltaic panels, which comprise a plurality of substantially square or rectangular solar cells placed side-by-side, said panels with cylindrical cells weigh less for the same surface area.

A currently known use of said photovoltaic panels with cylindrical cells is installed on the roofs of coverings, constrained to the frame structure of said coverings, and lying above the covering sheets.

The sunlight absorbed by the photovoltaic panels partly comes to bear directly on the surface of the cylindrical cells, while a part passes through the spaces between the cylindrical cells and, coming to bear on the covering sheet underneath, it is partly reflected back to the cylindrical cells and partly transmitted to the ground underneath, and consequently to the plants.

The space occupied by said coverings for greenhouses is thus exploited by installing photovoltaic panels with cylindrical cells on the roof to recover solar energy.

The coverings of known type with photovoltaic panels installed on the roof have a drawback, however, in that in order to install the photovoltaic panels it is necessary to bear in mind that the movable parts, e.g. windows, that open outwards must remain unobstructed, and this limits the surface area available.

In addition, for any servicing activities, repairs or replacements of the photovoltaic panels or parts thereof, it becomes necessary for the technician to climb onto the roof of the covering, which must consequently be step steady, i.e. it must have a structural design and be manufactured adequately to ensure that it can be walked on, which entails greater design, construction and materials costs than for structures that are not step steady.

The photovoltaic panels positioned on the covering are also exposed to the weather - hail, rain and snow - and consequently demand frequent intervention for servicing, repairs or replacements.

The object of the present invention is a new type of covering for greenhouses with the recovery of solar energy.

The main object of the present invention is to exploit the space on the coverings for greenhouses by installing photovoltaic panels that do not interfere with, nor restrict in any way the usage and functionalities of the covering.

Another object of the present invention is to reduce the structural design, manufacturing and material costs of the covering.

Another object of the present invention is to protect the photovoltaic panels against the weather, to extend their life span, and limit the need for servicing, repairs or replacements.

Another object is to simplify the procedure for the installation, servicing and or other actions on the photovoltaic panels.

Another object is to maximise the surface area available for the installation of photovoltaic panels.

These and other direct and complementary objects are achieved by the new type of covering for greenhouses with the recovery of solar energy, comprising in its main parts a frame structure with anchoring or ground foundation elements, uprights and cross members forming the walls and the roof of the covering with a pitch or arch-shaped profile, one or more covering panels or sheets constrained to said frame structure and forming therewith the walls and a roof of the covering, and one or more photovoltaic panels with cylindrical cells constrained directly or indirectly to said frame structure, wherein said photovoltaic panels are positioned underneath said covering panels or sheets.

Said photovoltaic panels are consequently covered by said covering panels or sheets, which consequently serve the purpose both of forming the roof of the greenhouse to protect the plants against the weather and ensure that the humidity and temperature conditions best suited to the plants are maintained, and of protecting the photovoltaic panels against said weather conditions, as well as reducing their dirtying and extending their life span. Being in a position underneath said covering panels or sheets, the photovoltaic panels are also accessible from below, i.e. from inside the greenhouse, simply using trolleys to perform any servicing or other procedures required thereon.

The covering can consequently be designed, structured and manufactured without having to be step steady, meaning lower manufacturing costs and lower costs of materials, and enormously reducing the risks of accident for the servicing technicians.

In addition, the frame structure of the covering can have movable parts, e.g. for opening outwards, and this procedure is not hindered by the presence of the photovoltaic panels, which are located underneath instead.

The whole surface area of the covering can thus be used for the installation of photovoltaic panels.

Said photovoltaic panels can be arranged following the pitch or arch-shaped profile of the covering, or they can be arranged, for instance, with a gap between the panels and the roof of the covering.

The presence of the covering panels or sheets allows for the transmission of the sunlight coming to bear thereon, without limiting the absorption efficiency of the photovoltaic panels.

Provision can also be made for the new covering to include said photovoltaic panels substantially following the profile of the pitched or arch-shaped roof of the covering, and for a further layer of covering panels or sheets to be installed underneath said photovoltaic panels, also serving the purpose of reflecting the sunlight towards the underside of the cylindrical solar cells and thereby further maximising the surface area for absorbing solar energy.

Provision can also be made for underlying said sheets or panels to be matt if the plants being grown in the greenhouse necessitate a greater amount of shade and protection against the sunlight.

The characteristics of the new covering are better explained in the description that follows with reference to the attached drawings, provided as a non-limiting example.

Figure 1 schematically shows a side view of the new covering (1), Figure 2 schematically shows a front view, and Figure 3 shows a solar panel (3) with cylindrical cells (31).

Figure 4 schematically shows a detail of the covering (1) according to a first embodiment of the invention, illustrating part of a solar panel (3) with cylindrical cells (31) with the covering sheet above it (4).

Figure 5 schematically shows a detail of the covering (1) in a second embodiment, showing part of a solar panel (3) with cylindrical cells (31) with covering sheets above (4) and below it (5).

This is a new covering (1) for greenhouses for the recovery of solar energy.

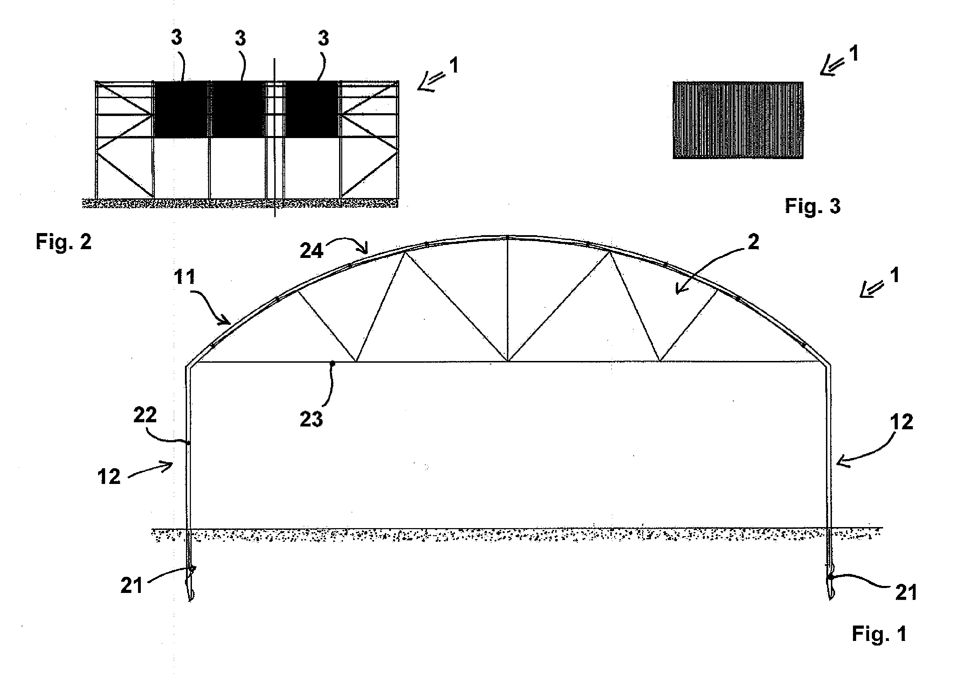

The new covering (1) comprises a frame structure (2) consisting of anchoring or ground foundation elements (21), uprights (22) and cross members (23) forming the walls (12) and the roof (11) of the covering, e.g. a pitched roof or a roof with an arch-shaped profile, as shown in Figures 1 and 2.

Said frame structure (2) may comprise movable parts (24), preferably on the roof (11), such as windows or hatches that can be opened outwards.

One or more photovoltaic panels (3) with cylindrical cells (31) are installed on said roof (11) of the covering (1), which comprise a plurality of said cylindrical cells (31) aligned to form linear cylindrical elements (32) lying parallel and side-by-side, and constrained so as to form a panel (3) of substantially rectangular shape.

In the solution shown in Figure 1, said photovoltaic panels (3) are installed on said roof (11) of the covering (1) substantially following the profile of the arch-shaped roof, while said photovoltaic panels (3) may also be installed with a different trend, e.g. arranged horizontally, in the space underneath the roof (11).

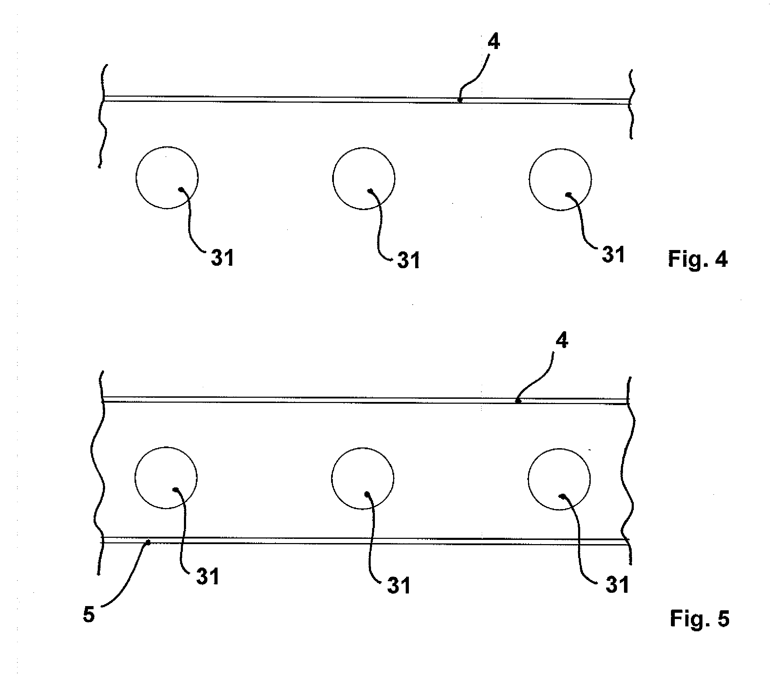

The new covering (1) also comprises one or more covering panels or sheets (4), designed to transmit the sunlight and constrained directly or indirectly to said frame (2) and/or to said photovoltaic panels (3) and occupying a position above the photovoltaic panels (3), so as to cover them, as shown schematically in Figure 4.

Said covering sheets (4) can be constrained to said frame (2) and consequently follow the profile of said frame (2).

Said photovoltaic panels (3) can thus be positioned immediately below the covering sheets (4), as shown in Figure 4, or at a given distance from the latter.

Sunlight is transmitted through said covering sheets (4) and partly comes to bear on the photovoltaic panels (3) and is consequently absorbed by the solar cells (31). The rays of sunlight that do not come to bear on the surface of the solar cells (31) reach the ground, i.e. the plants.

According to an alternative embodiment, as shown in Figure 5, the new covering (1) may comprise a further layer of covering panels or sheets (5) installed in a position underneath said photovoltaic panels (3).

Said underlying covering sheets (5) maximise the solar energy absorption by said photovoltaic panels (3), because they partially reflect the sunlight back towards the underside (32) of the cylindrical solar cells (31).

Said underlying sheets or panels (5) may also be matt, for instance, if the plants grown in the greenhouse need more shade and adequate protection against the sunlight.

Thus, with reference to the above description and to the attached drawings, the following claims are advanced.

## Claims

1. Covering (1) for greenhouses, comprising a frame structure (2) with anchoring or ground foundation elements (21), uprights and cross members (22) defining the walls (12) and the roof (11) of the covering, one or more covering panels or sheets (4) suited to transmit sunlight, constrained on the top to said frame structure (2) and forming with it the walls (12) and the roof (11) of the covering (1), **characterized in that** it comprises one or more photovoltaic panels (3) with cylindrical cells (31), directly or indirectly constrained to said frame structure (2) and positioned under said covering panels or sheets (4) and covered by them.

2. Covering (1) for greenhouses according to claim 1, **characterized in that** it comprises a further layer of covering panels or sheets (5) mounted in a position under said solar panels (3) and suited to reflect at least partially the sunlight incident on the surface under the cylindrical solar cells (31).

3. Covering (1) for greenhouses according to claims 1, 2, **characterized in that** said solar panels (3) are accessible from the bottom from the inside of the greenhouse, to carry out any kind of intervention or operation on them.

4. Covering (1) for greenhouses according to claims 1, 2, 3, **characterized in that** said frame structure (2) has windows, doors or moving parts that can be opened or lifted towards the outside.

5. Covering (1) for greenhouses according to claims 1, 2, 3, 4, **characterized in that** said photovoltaic panels (3) are positioned following the pitch or arch-shaped profile of the roof (11).

6. Covering (1) for greenhouses according to claims 1, 2, 3, 4, **characterized in that** said photovoltaic panels (3) are positioned in the area under the roof (11) and spaced from it.

7. Covering (1) for greenhouses according to claim 2, **characterized in that** said lower covering panels or sheets (5) are matt.
